# EUROPÄISCHE PATENTANMELDUNG

(11) **EP 0 601 454 A1**
(43) Veröffentlichungstag der Anmeldung: **15.06.1994**
(21) Anmeldenummer: 93119344.5
(22) Anmeldetag: 01.12.1993
(51) Int. Cl.: B60J 1/20

(54) **Sonnenschutzrollo für Kraftfahrzeuge**

(30) Priorität: 07.12.1992 DE 4241138
(71) Anmelder: Baumeister & Ostler GmbH & Co., D-73773 Aichwald (DE)
(72) Erfinder: Ament, Eduard, D-73773 Aichwald (DE)
(74) Vertreter: Rüger, Rudolf, Dr.-Ing.

(57) **Zusammenfassung**

Die Erfindung betrifft ein Sonnenschutzrollo (6), insbesondere für Kraftfahrzeuge. Das Sonnenschutzrollo (6) weist eine in einem Sockel (7) drehbar gelagerte Wickelwelle (8) auf, die von einer Federeinrichtung in Aufrollrichtung vorgespannt ist.

An der Wickelwelle (8) ist eine Rollobahn (16) mit einer Kante befestigt. Dieser Kante liegt eine weitere Kante gegenüber, die mit einer Zugschiene (17) versehen ist.

Das Sonnenschutzrollo (6) weist zur Halterung der Zugschiene (17) wenigstens ein biege- und drucksteifes Halteelement (19) auf, das mit einem Ende fest mit der Zugschiene (17) verbunden ist.

Das Halteelement (19) ist außerdem in einer an dem Sockel (7) befestigten Lager- und Arretiereinrichtung (25) abgestützt und bezüglich seiner Längsrichtung in der Aufwickelrichtung der Rollobahn (16) axial verschieblich geführt sowie wahlweise arretierbar gelagert.

Dabei ist das Halteelement (19) wenigstens im Bereiche der Rollobahn (16) in einer zu der ausgefahrenen Rollobahn (16) im wesentlichen parallelen Ebene im rechten Winkel zu der Wickelwelle (8) angeordnet.

## Beschreibung

Der Gegenstand der Erfindung ist ein Sonnenschutzrollo mit den Merkmalen des Patentanspruchs 1.

Größere Fensterflachen, insbesondere die relativ großflächigen Frontscheiben von Nutzfahrzeugen aller Art, lassen, vor allem wenn die Sonne tief steht, sehr viel Sonneneinstrahlung in die betreffenden Fahrzeuginnenräume glangen. Von der häufig unerwünschten Aufheizung des Fahrzeuginnenraumes abgesehen, kann das Sonnenlicht den Fahrzeugführer blenden, was eine Gefahr darstellt. Es sind deshalb eine Reihe von Sonnenschutzrollos in Gebrauch, die ein bedarfsweises Abschatten der jeweiligen Fensterfläche gestatten. Bei derartigen Sonnenschutzrollos müssen die Rollobahnen im ausgefahrenen Zustand gehalten werden, um ein Pendeln oder Klappern zu vermeiden. Allerdings sollen die betreffenden Sonnenschutzrollos auch nachträgliches problemloses Einbauen in unterschiedliche Fahrzeuge ermöglichen, wobei der Montageaufwand gering sein soll.

In der DE 36 12 165 A1 ist ein Sonnenschutzrollo für die Heckscheibe eines Personenkraftwagens beschrieben. Bei diesem Sonnenschutzrollo ist die Rollobahn mit einer Kante an einer in einem Sockel drehbar gelagerten Wickelwelle befestigt, die von einem Federmotor in Aufwickelrichtung vorgespannt ist. Der Sockel befindet sich unterhalb des Heckfensters. An der der Wickelwelle gegenüberliegenden Kante der Rollobahn ist eine Zugschiene vorgesehen, die parallel zu der Wickelwelle verläuft und von einem in mehrere Segmente unterteilten Teleskopstab als Auszugseinrichtung betätigt wird; bei eingefahrenem Teleskopstab ist die Rollobahn auf die Wickelwelle aufgewickelt. Der ausfahrende Teleskopstab drückt die Zugschiene von der Wickelwelle weg und zieht damit die Rollobahn von dieser ab. Der Teleskopstab ist über ein biegeelastisches Schubglied betätigt, das seinerseits von einer Antriebseinrichtung angetrieben wird.

Lediglich in der voll ausgefahrenen Stellung ist die Zugschiene gegen ein Pendeln um die Längsachse des Teleskopstabes gesichert, weil in dieser Stellung die Zugschiene in Halterungen an der Oberkante der Heckscheibe eingreift.

Bei dem bekannten Rollo ist lediglich ein motorischer Antrieb vorgesehen, nicht jedoch eine Ausführungsform zur manuellen Betätigung des Rollos. Außerdem kann das Rollo nicht in Zwischenstellungen gebracht werden, um nur einen Teil der Heckscheibe abzuschatten.

Davon ausgehend ist es Aufgabe der Erfindung, ein einfach zu handhabendes Sonnenschutzrollo zu schaffen, das einen robusten Aufbau aufweist und dabei eine stabile Halterung der Rollobahn gewährleistet, um die Rollobahn auch in Zwischenstellungen schwingungsfrei zu halten.

Die vorstehend genannte Aufgabe wird durch ein Sonnenschutzrollo mit den Merkmalen des Anspruchs 1 gelöst.

Die an der Wickelwelle befestigte Rollobahn wird von der in Aufwickelrichtung von der Federeinrichtung vorgespannten Wickelwelle unabhängig von der Stellung der Zugschiene vorgespannt. In jeder Stellung der Zugschiene, d.h. bei beliebigen Auszugsweiten der Rollobahn wird diese dadurch straff gehalten. Die Zugschiene wird dabei von dem biege- und drucksteifen Halteelement in definierter Lage gehalten, das hinreichend drehsteif ist. Durch die feste Verbindung des einen Endes des Halteelementes mit der Zugschiene und durch die arretierbare Lagerung des Halteelementes an dem Sockel ist die Zugschiene mit der Rollobahn stabil gelagert so daß kaum störende Schwingungen der Rollobahn oder der Zugschiene zu befürchten sind. Durch die stabile Lagerung der Zugschiene über das Halteelement können zusätzliche Führungs- oder Haltemittel entfallen, die eine aufwendigere Montage nach sich ziehen würden. Durch die wahlweise Arretierbarkeit der Lager- und Arretiereinrichtung ist das Halteelement und damit die Zugschiene für die Rollobahn in beliebigen Auszugsstellungen blockierbar. Das Halteelement erfüllt damit eine Doppelfunktion, nämlich die stabile Halterung der Zugschiene und die Festlegung von deren Auszugsstellung.

Die Zugschiene wird besonders unempfindlich gegen Drehschwingungen gelagert, wenn das Halteelement über die Lager- und Arretiereinrichtung drehfest mit dem Sockel verbunden ist. Das kann erreicht werden, indem das Halteelement einen polygonalen, mit einer zur Lagerung des Halteelementes in der Lager- und Arretiereinrichtung vorgesehenen Öffnung übereinstimmenden Querschnitt erhält.

Durch die Ausbildung der Lager- und Arretiereinrichtung derart, daß diese eine Schwenkbewegung des Halteelementes um eine zu der Wickelwelle parallele, innerhalb der Lager- und Arretiereinrichtung liegende Schwenkachse zuläßt, wird die Nutzung dieser Bewegungskomponente zur Steuerung der Arretierungseinrichtung ermöglicht. Wenn das Halteelement in seiner Schwenkbewegung durch ein Federelement auf einen Anschlag zu vorgespannt ist, ist damit auch die Arretiereinrichtung auf eine Stellung, bspw. die Blockierstellung zu vorgespannt.

Dann kann das Halteelement durch die Schwenkbewegung um die Schwenkachse entgegen der Vorspannung des Federelementes von einer Blockierstellung in eine Freigabestellung überführbar sein, wobei das Halteelement in der Blockierstellung unverschieblich in der Lager- und Arretiereinrichtung gehalten und in der Freigabestellung in der Lager- und Arretiereinrichtung axial verschieblich ist. Somit ist eine einfache Handhabung des Sonnenschutzrollos sichergestellt.

In einfacher Weise kann die Lager- und Arretiereinrichtung von zwei Halbschalen gebildet sein, die um die zu der Wickelwelle parallele Schwenkachse schwenkbar aneinander gelagert und federnd aufeinander zu vorgespannt sind, wobei eine der Halbschalen fest mit dem Sockel verbunden ist.

Zur Übertragung der Schwenkbewegung des Halteelementes auf die Halbschale, kann die schwenkbar gelagerte Halbschale eine plane Lagerfläche aufweisen. Über die Lagerfläche überträgt sich außerdem die von der Halbschale ausgeübte Federkraft auf das Halteelement und drückt dieses an einen Teil der anderen Halbschale an.

Zum Erreichen eines sicheren Blockierens des Halteelementes ist es in diesem Fall vorteilhaft wenn die fest mit dem Sockel verbundene Halbschale eine Haltefläche aufweist, die einer an dem Halteelement vorgesehenen Bremsfläche zugeordnet ist. Die somit aneinander anliegende Bremsfläche und die Haltefläche können bei entsprechender Ausgestaltung das Halteelement arretieren.

Um eine Steuerbarkeit der Lager- und Arretiereinrichtung zu erreichen, kann die Haltefläche bezüglich der Längsrichtung des Halteelementes gegen die Schwenkachse versetzt mit der Bremsflache durch die Schwenkbewegung des Halteelementes in und außer Eingriff bringbar sein.

Dabei sollte sich die an dem Halteelement vorgesehene Bremsfläche über die Lange des Halteelementes in Längsrichtung erstrecken. Dadurch läßt sich das Halteelement in jeder einnehmbaren Lage arretieren. Das gilt insbesondere, wenn die Bremsflache mit der Haltefläche als Paarung mit hoher Haftreibung ausgebildet ist.

Zur Abstützung und leichtgängigen Handhabung des Halteelementes können an diesem zu beiden Seiten der Bremsfläche sich in Längsrichtung erstreckende Anlageflächen vorgesehen sein.

Andererseits wird eine besonders sichere Arretierung durch das Vorsehen einer Verzahnung an der Haltefläche und der Bremsfläche erzielt. Dabei sollte die Abmessung der Verzahnung derart getroffen sein, daß deren Zähne durch die Schwenkbewegung des Halteelementes in und außer Eingriff bringbar sind.

Ein sicheres Eingreifen der Zähne der Verzahnung ineinander ohne die Gefahr des Ausrastens durch Vibrationen wird erreicht, wenn die Verzahnung im rechten Winkel zu der Längsrichtung des Halteelementes liegende Zahnflanken aufweist, und wenn die Zahnflanken der Haltefläche und der Bremsfläche, die durch die Wirkung der von der Federeinrichtung über die Rollobahn ausgeübte Zugkraft aneinander anliegen, jeweils rechtwinklig zu der Rollobahn liegen. Ein Lösen der so gebildeten formschlüssigen Verbindung, bspw. durch die von der Rollobahn ausgehende Zugkraft, ist nicht anzunehmen.

Eine einfache Lösung ergibt die Verwendung eines Rechteckstabes als biegesteifes Halteelement. Wenn dieser an seinem mit der Zugschiene verbundenen Ende auf die Zugschiene zu gekröpft ist, verlauft er in einem gleichbleibenden Abstand zu der Rollobahn. Dadurch wird ein Anschlagen der Rollobahn an den Rechteckstab vermieden. Überdies kann der Rechteckstab an seinem anderen Ende ein Anschlagmittel zur Begrenzung der maximalen Auszugsweite aufweisen.

Wenn das biegesteife Halteelement in der Art einer Schubgliederkette ausgebildet ist, eröffnet sich die Möglichkeit, die druckentlastete Schubgliederkette, die jenseits der Rollobahn über den Sockel hinaussteht, auf einer gekrümmten Bahn zu bewegen. Dadurch kann das Halteelement auch bei einer dachnahen Montage des Sonnenschutzrollos bspw. unsichtbar in der Dachverkleidung versenkt werden.

Das biegesteife Halteelement kann eine Kette von Segmenten aufweisen, die um zu der Wickelwelle parallele Scharnierachsen jeweils paarweise schwenkbar aneinander gelagert sind. Wenn jedes Segment jeweils ein Anschlagmittel aufweist, gegen das eines der benachbarten Segmente federnd vorgespannt ist, streckt sich die Schubgliederkette in unbelastetem oder nur druckbelastetem Zustand in eine stabförmige, gerade Form.

Wenn das Halteelement als Schubgliederkette ausgebildet ist, kann an dem Sockel an der der Rollobahn abgewandten Seite vorteilhafterweise eine Führungseinrichtung für die gerade unbenutzten Segmente des Halteelementes vorgesehen sein.

Ein komfortable Lösung wird durch die Verwendung einer Antriebseinrichtung mit einer Antriebswelle erreicht, die mit dem als Rechteckstab oder als Schubgliederkette ausgebildeten Halteelement getrieblich verbunden ist. Das Halteelement ist dazu nach Art einer Zahnstange ausgebildet, die mit einem auf der Antriebswelle sitzenden Ritzel in Eingriff steht. Das Halteelement ist dann in der Lager- und Arretiereinrichtung ausschließlich axial verschieblich gehalten.

In der Zeichnung ist ein Ausführungsbeispiel der Erfindung dargestellt. Es zeigen:
- Fig. 1: Ein Fahrerhaus eines mit erfindungsgemäßen von Hand zu betätigenden Sonnenschutzrollos ausgestatteten Nutzfahrzeuges, in einer perspektivischen, ausschnittsweisen und schematisierten Darstellung,
- Fig. 2: ein Sonnenschutzrollo nach Fig. 1, in perspektivischer Darstellung,
- Fig. 3: das Sonnenschutzrollo nach Fig. 2 mit einer geschnitten dargestellten Lagereinrichtung, in Seitenansicht und in einem anderen Maßstab,
- Fig. 4: eine andere Ausführungsform des in Fig. 2 dargestellten Sonnenschutzrollos in Seitenansicht,
- Fig. 5: eine weitere Ausführungsform des Sonnenschutzrollos mit einem in der Art einer Schubgliederkette ausgebildeten Halteelement, in perspektivischer Darstellung,
- Fig. 6: ein motorgetriebenes Sonnenschutzrollo mit einem als Schubgliederkette ausgebildeten Halteelement, in perspektivischer Darstellung und
- Fig. 7: eine Ausführungsform des erfindungsgemäßen Sonnenschutzrollos mit einer motorgetriebenen Antriebseinrichtung und einem starr ausgebildeten Halteelement, in perspektivischer Darstellung.

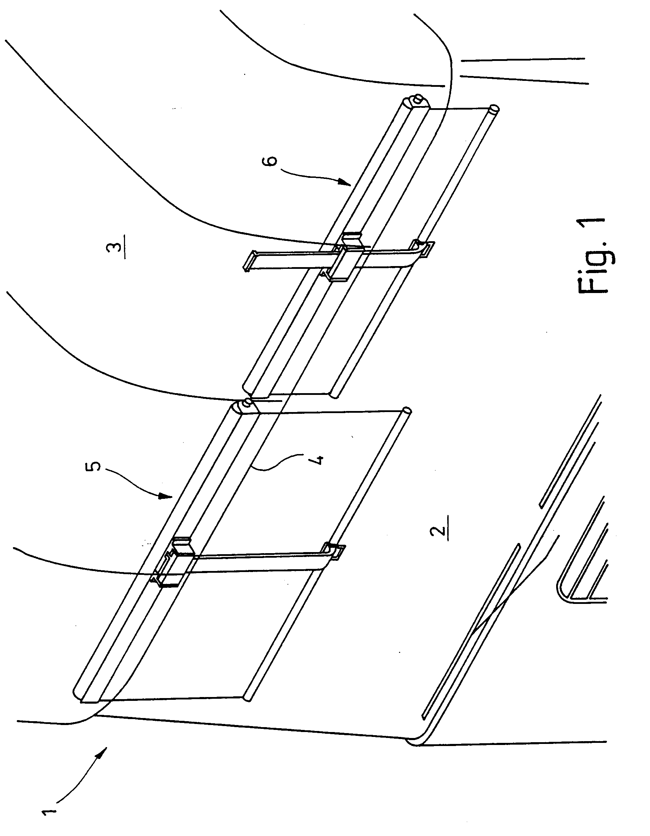

In Fig. 1 ist ein Fahrerhaus 1 eines Nutzfahrzeuges, bspw. eines Busses oder LKW's angedeutet, das an seiner Vorderseite mit einer großflächigen Frontscheibe 2 versehen ist. Oberhalb der Frontscheibe 2 befindet sich ein Dach 3, das sich an der Vorderseite des Fahrerhauses 1 nach unten zieht und ein Stück weit in der Flucht der Frontscheibe 2 ungefähr vertikal verläuft, bis es bei einer Kante 4 an die Frontscheibe 2 anschließt.

Zur bedarfsweisen Abschattung der Frontscheibe 2 sind an der Innenseite des Daches 3 oberhalb der Kante 4 mittels nicht weiter dargestellter Halterungen zwei einander baugleiche Sonnenschutzrollos 5, 6 in miteinander fluchtender Anordnung befestigt. Während in der Fig. 1 das linke Sonnenschutzrollo 5 auf seine maximale Länge ausgezogen ist, um eine größtmögliche Abschattung der betreffenden Fensterhälfte zu erreichen, ist das in Fig. 1 rechte Sonnenschutzrollo 6 nur etwa zur Hälfte ausgezogen.

Wegen der Baugleichheit der Sonnenschutzrollos 5, 6 wird im folgenden lediglich auf das Sonnenschutzrollo 6 bezug genommen.

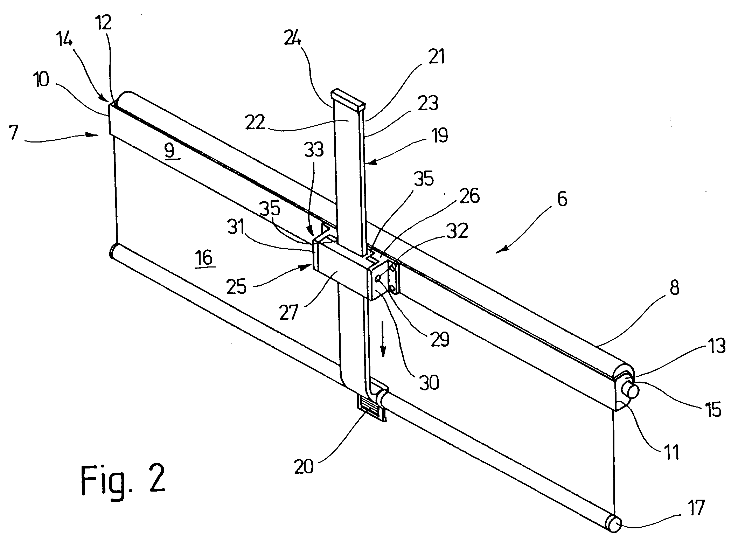

Das für sich in Fig. 2 dargestellte Sonnenschutzrollo 6 weist einen Sockel 7 auf, in dem eine Wickelwelle 8 drehbar gelagert ist. Der Sockel 7 beinhaltet einen sich im Abstand parallel zu der Wickelwelle 8 erstreckenden geraden Steg 9, der zu beiden Enden 10, 11 in rechtwinklig abstehende Laschen 12, 13 übergeht. Die Laschen 12, 13 liegen parallel sowie in einem Abstand zueinander, der der Länge der Wickelwelle 8 entspricht. Jede Lasche 12, 13 weist jeweils eine Bohrung 14, 15 auf, von der ein entsprechender Lagerzapfen der Wickelwelle 8 aufgenommen ist; einer der Lagerzapfen ist in der betreffenden Lasche drehfest gehalten.

Die Wickelwelle 8 ist von einem nicht weiter dargestellten Federmotor in einer Richtung vorgespannt, die die Aufwickelrichtung bildet. Der Federmotor ist dabei derart bemessen, daß sich das auf die Wickelwelle übertragene Drehmoment auch bei mehreren Umdrehungen derselben nur wenig ändert. Er stützt sich über den drehfest gehaltenen Lagerzapfen an dem Sockel 7 ab.

An der Wickelwelle 8 ist mit einer Kante eine rechteckige Rollobahn 16 befestigt, die wenigstens, wenn sie nicht ganz ausgezogen ist, einige Male um die Wickelwelle 8 geschlungen ist. Die Breite der Rollobahn 16 stimmt in wesentlichen mit der Länge der Wickelwelle 8 überein.

An einer von der Wickelwelle 8 abliegenden Kante der Rollobahn 16 ist eine Zugschiene 17 befestigt, deren Länge der Breite der Rollobahn entspricht. Die Zugschiene 17 geht damit über die gesamte Breite der Rollobahn.

Die Zugschiene 17 ist fest mit einem als Halteelement 18 dienenden und im Querschnitt rechteckigen Rechteckstab 19 verbunden, der dazu an dem betreffenden Ende eine zylindrische Öse 20 aufweist, durch die die Zugschiene 17 hindurchgeführt ist. Der Rechteckstab 19 liegt mit seiner Flachseite parallel zu der mehr oder weniger weit ausgezogenen Rollobahn 16 und im rechten Winkel zu der Wickelwelle 8. Um ein Anschlagen der Rollobahn 16 an den Rechteckstab 19 zu vermeiden, ist der Rechteckstab 19 bei seinem in Fig. 2 unteren Ende auf die Rollobahn 16 zu gekröpft. Dadurch ist über die gesamte Länge der Rollobahn 16 ein wenige Zentimeter betragender Abstand zwischen dem Rechteckstab 19 und der Rollobahn 16 eingehalten. An seiner der Rollobahn 16 zugewandten Seite und an der dieser gegenüberliegenden Seite weist der Rechteckstab 19 Anlageflächen 21, 22 auf. Die Schmalseiten des Rechteckstabes 19 bilden Führungsflächen 23, 24. Die Länge des Rechechteckstabes 19 entspricht dem maximalen Auszug des Sonnenschutzrollos 6.

Der sich über die Wickelwelle 8 hinaus erstreckende Rechteckstab 19 ist in einer ungefähr mittig an dem Steg 9 angeordneten Lager- und Arretiereinrichtung 25 axial verschieblich geführt. Die Lager- und Arretiereinrichtung 25 weist zwei Halbschalen 26, 27 auf, die gemeinsam eine rechteckige Öffnung 28 begrenzen, durch die der Rechteckstab 19 mit einigem Spiel durchgeht.

Die Halbschale 26 ist an den zu dem Sockel 7 gehörigen Steg 9 angeflanscht und fest mit diesem verbunden. Die Halbschale 27 ist um eine parallel zu der Wickelwelle 8 liegende Schwenkachse 29 um einen gewissen Winkel schwenkbar an der ortsfesten Halbschale 26 gelagert. Die Schwenkachse 29 liegt näher an der der Zugschiene 17 benachbarten Seite der Lager- und Arretierungseinrichtung 25. Zur Lagerung der Schwenkachse 29 erstrecken sich von der Halbschale 26 zwei im Abstand parallel zueinander liegende Wangen 30, 31 in Richtung von dem Steg 9 weg über den Rechteckstab hinaus. In jeder Wange 30, 31 ist ungefähr mittig jeweils eine Bohrung 32, 33 vorgesehen, wobei die Bohrung 33 in der Fig. 2 verdeckt und somit unsichtbar ist. Die Bohrungen 32, 33 fluchten miteinander und definieren die Schwenkachse 29.

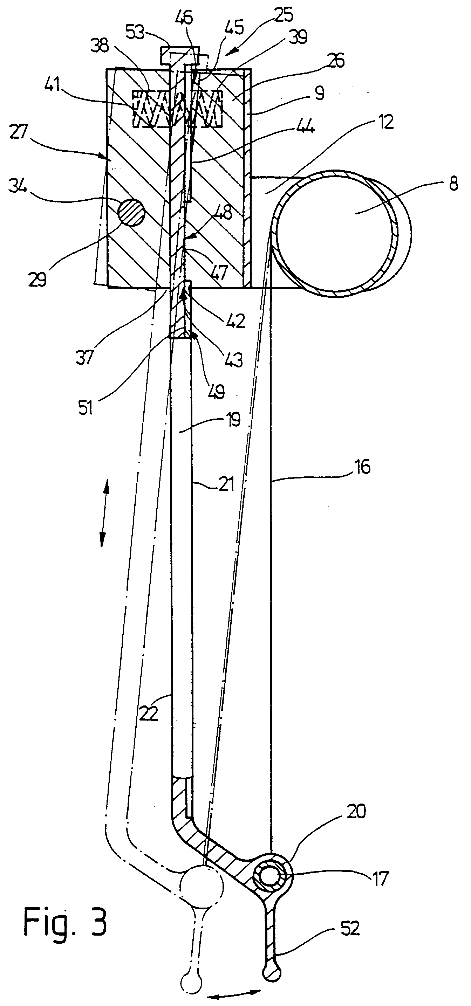

Zwischen den Wangen 30, 31 ist die Halbschale 27 aufgenommen. In der Halbschale 27 ist eine auf die Bohrungen 32, 33 ausgerichtete Öffnung 34 (Fig. 3) vorgesehen, durch die ein Lagerbolzen durchgeht. Der Lagerbolzen kann auch geteilt sein. Dann sind bspw. zwei die Bohrungen 32, 33 durchgreifende Schraubenbolzen von beiden Seiten her in die Öffnung 34 eingeschraubt.

Zur seitlichen Führung des Rechteckstabes 19 weist die schwenkbar gelagerte Halbschale 27 an ihrer der Halbschale 26 zugewandten Seite zwei auf die Halbschale 27 zu gerichtete Führungsstege 35, 36 auf. Die Führungsstege 35, 36 sind in einem Abstand parallel zueinander angeordnet, der der Breite des Rechteckstabes 19 entspricht. An den einander zugewandten Seiten der Führungsstege 35, 36 liegen die Führungsflächen 23, 24 des Rechteckstabes 19 an. Dadurch ist der Rechteckstab 19 von der Lager- und Arretiereinrichtung 25 in seitlicher Richtung unverschwenkbar gelagert.

Der innere Aufbau der Lager- und Arretiereinrichtung 25 ist der Fig. 3 zu entnehmen, in der diese im Querschnitt und gegenüber der Fig. 1 vergrößert dargestellt ist. Der Schnitt ist im rechten Winkel zu der Wickelwelle 8 durch beide Halbschalen 26, 27 geführt. Der Rechteckstab 19 und die Rollobahn 16 sind verkürzt dargestellt.

Die in ihrer Ruhestellung in dick ausgezogenen Linien und schraffiert dargestellte Halbschale 27 liegt mit einer planen Lagerfläche 37 an der der Rollobahn 16 abgewandten Seite an dem Rechteckstab 19 an. Diese Seite des Rechteckstabes 19 stellt eine Anlagefläche 34 dar, mit der eine Schwenkbewegung des Rechteckstabes 19 auf die Halbschale 27 übertragbar ist.

Neben dem Rechteckstab 19 ist zu beiden Seiten jeweils oberhalb der Öffnung 34 in der schwenkbar gelagerten Halbschale 27 eine Sackbohrung 38 vorgesehen, der eine weitere, in der ortsfesten Halbschale 26 vorgesehenen Sackbohrung 39 fluchtend gegenüberliegt. In den von den beiden Sackbohrungen 38, 39 gebildeten ungefähr zylindrischen Hohlraum ist eine unter Vorspannung stehende Schraubenfeder 41 eingesetzt, die als Druckfeder wirkt.

Die mit dem Sockel 7 verbundene Halbschale 26 weist auf ihrer zu der schwenkbaren Halbschale 27 weisenden Seite eine Gleitfläche 42 auf, die mit der Lagerfläche 37 der in der Ruhestellung befindlichen Halbschale 27 einen Parallelspalt 43 begrenzt. Die Weite des Parallelspaltes 43 entspricht der Dicke des Rechteckstabes 19. Oberhalb der von der Öffnung 34 definierten Schwenkachse 29 geht die Gleitfläche 42 an einer Knicklinie 44 in einen abgewinkelten Abschnitt 45 über. Die Knicklinie 44 ist zu der Schwenkachse 29 parallel. Dadurch bildet die Lagerfläche 37 mit dem abgewinkelten Abschnitt 45 einen für alle Querschnitte unveränderten Keilspalt 46. Wenn die Halbschale 27 in ihre strichpunktiert dargestellte, verschwenkte Position gedreht ist, liegt die Lagerfläche 37 parallel zu dem Abschnitt 45, wobei der Abstand gleich der Dicke des Rechteckstabes ist.

Der Winkel, um den der Abschnitt 45 gegen die übrige Gleitfläche 42 geneigt ist, ist derart bemessen, daß die entsprechende Auslenkung des Rechteckstabes 19 an seinem unteren Ende lediglich wenige Zentimeter beträgt. Entsprechend ist die Lage der Knicklinie 44.

Auf der Gleitfläche 42 ist ein um wenige Millimeter erhabener Anschlagteil 47 vorgesehen, der eine zu der Gleitfläche 42 parallele Haltefläche 48 aufweist. Der Anschlagteil 47 erstreckt sich nicht über die gesamte Breite der Gleitfläche 42, sondern lediglich über einen kleinen, in der Mitte der Gleitfläche 42 liegenden Bereich. In entsprechender Breite ist auf der der Rollobahn zugewandten Seite des Rechteckstabes 19 eine nutartige Vertiefung 49 vorgesehen, deren Boden eine zu der Anlagefläche 22 parallel liegende Bremsfläche 51 ist. Die Tiefe der nutartigen Vertiefung 49 ist etwas geringer als die Höhe des erhabenen Anschlagteiles 47 gegenüber der Gleitfläche 42. Dadurch wirkt die an der Schwenkachse 29 umgelenkte Kraft der Schraubenfeder 41 als Andruckkraft zwischen der Haltefläche 48 und der Bremsfläche 51. Entsprechend der Wahl der Lage der Schwenkachse 29 in Bezug auf die Schraubenfeder 41 und die Haltefläche 48 können die für die Übertragung der Federkraft vorliegenden Hebelverhältnisse festgelegt werden. Die Oberflächen der Bremsfläche 51 und der Haltefläche 48 sind derart beschaffen, daß sie eine nicht zu geringe Haftreibung miteinander sicherstellen.

Lediglich der Vollständigkeit halber sei erwähnt, daß bei der Öse 20 ein Handgriff 52 zur Erleichterung der Handhabung vorgesehen ist und daß an dem jenseits der Wickelwelle 8 liegenden Ende des Rechteckstabes 19 ein Anschlagmittel 53 vorgesehen ist.

Das vorstehend beschriebene Sonnenschutzrollo 6 funktioniert wie folgt:
In Ruhestellung ist der Rechteckstab 19 soweit wie möglich in Fig. 1 nach oben geschoben, so daß der kleinstmögliche Abstand zwischen der Zugschiene 17 und der Wickelwelle 8 eingestellt ist. Die Rollobahn 16 ist auf die Wickelwelle 8 aufgewickelt und durch die Wirkung des Federmotors straff gehalten. Die Lager- und Arretiereinrichtung 25 steht in ihrer Blockierstellung. In dieser Stellung ist die an dem Rechteckstab 19 vorgesehene Bremsfläche 51 durch die Federkraft der Schraubenfeder 41 fest an die Haltefläche 48 angedrückt. Sowohl die von der federnd vorgespannten Wickelwelle 8 auf die Rollobahn 16 übertragene Zugspannung als auch die in der Lager- und Arretiereinrichtung 25 wirkende Haftreibung halten den Rechteckstab 19 und die Zugschiene 17 in ihrer oberen Lage.

Bei Bedarf, d.h. wenn eine gewisse Abschattung erzielt werden soll, wird der Rechtechstab 19 mit seinem Handgriff 52 entgegen der Kraft der Schraubenfeder 41 in Richtung des in der Fig. 3 mit 54 bezeichneten Pfeiles in die strichpunktiert angedeutete Stellung verschwenkt. Dabei hebt die Bremsfläche 51 von der Haltefläche 48 ab. Die Lager- und Arretiereinrichtung 25 ist somit in ihrer Lösestellung. Mit dem Handgriff 52 kann die Rollobahn 16 nunmehr so weit wie gewünscht nach unten gezogen werden. Die Auszugsrichtung ist in der Fig. 3 durch einen mit 55 bezeichneten Pfeil gekennzeichnet. Der maximale Auszugsweg ist lediglich durch das Anschlagmittel 54 begrenzt.

Wird der Handgriff freigegeben, wird der Rechteckstab 19 mit der Rollobahn 16 von der über die Lagerfläche 37 auf den Rechteckstab 19 wirkenden Schraubenfeder 41 augenblicklich zurückgeklappt, bis die Bremsfläche 51 an der Haltefläche 48 anliegt. Die Haftreibung zwischen der Haltefläche 48 und der Bremsfläche 51 hält die Zugschiene 17 und den Rechteckstab 19 entgegen der von der Rollobahn 16 ausgehenden Zugkraft in der ausgezogenen Stellung. Der biegesteife Rechteckstab 19 hält die Zugschiene 17 und die Rollobahn 16 stabil in ihrer gewünschten Lage.

Zum Einrollen des Sonnenschutzrollos 6 wird lediglich der Handgriff 52 in Richtung des Pfeiles 54 bewegt, wodurch die Lager- und Arretiereinrichtung 25 freigegeben wird. Die Rollobahn 16 wird, solange der Handgriff 54 in der verschwenkten Lage gehalten wird, auf die Wickelwelle 8 aufgewickelt.

Ein mehr oder weniger weites Ausziehen der Rollobahn 16 ist stufenlos möglich. Bei gelöster Lager- und Arretiereinrichtung 25 sind der Rechteckstab 19 und die Rollobahn 16 in beliebiege Zwischenstellungen zwischen der maximalen Auszugsweite und der geschlossenen Stellung positionierbar und wieder arretierbar.

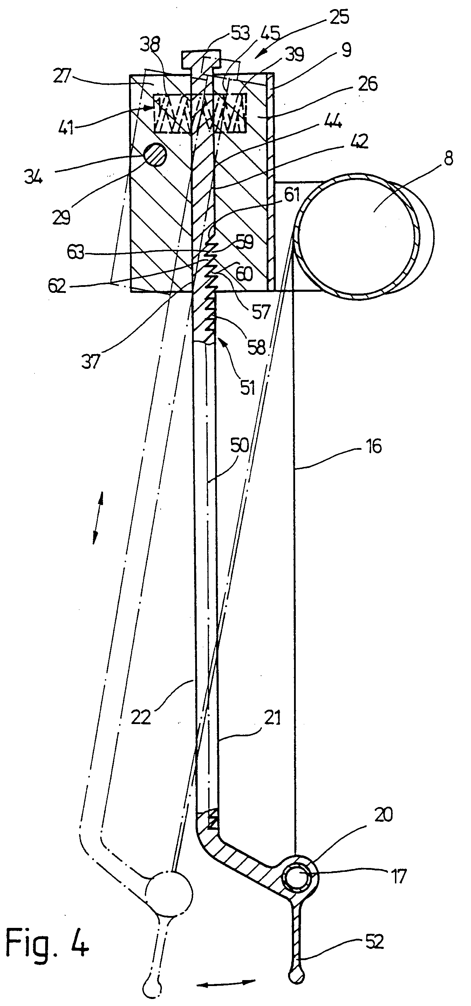

In der Fig. 4 ist eine abgewandelte Ausführungsform eines Sonnenschutzrollos 6 dargestellt, die weitgehend auf der in den Fig. 1 bis 3 dargestellten Ausführungsform basiert. Für bereits im Zusammenhang mit der vorstehend beschriebenen Ausführungsform genannte Teile sind in der Fig. 4 deshalb die gleichen Bezugszeichen verwendet worden, wie in den Fig. 1 bis 3.

Der wesentliche Unterschied zu der obigen Ausführungsform besteht darin, daß sowohl die Haltefläche 48 als auch die an dem Rechteckstab 19 vorgesehene Bremsfläche 51 mit jeweils einer Verzahnung 57, 58 versehen sind.

Die an der Haltefläche 48 vorgesehene Verzahnung 57 weist ein Sägezahnprofil mit gleichgroßen Zähnen 59 auf. Jeder Zahn 59 weist eine in rechten Winkel zu der Rollobahn 16 liegende Zahnflanke 60 und eine zu dieser im Winkel von ungefähr 45° geneigte Zahnflanke 61 auf. Die Flächenorientierung jeder Zahnflanke 60 weist in der Auszugsrichtung der Rollobahn 16. Das bedeutet, daß die Zahnflanken 60 von der Zugschiene 17 her sichtbar sind. Die an dem Rechteckstab vorgesehene Verzahnung 58 hat dieselben Abmessungen wie die Verzahnung 57, wobei jedoch die Flächenorientierungen von Zahnflanken 62, die im rechten Winkel zu der Rollobahn 16 liegen, entgegen der Auszugsrichtung der Rollobahn 16 gerichtet ist. Aufgrund dieser Gestaltung können die Verzahnungen 57, 58 passend ineinander greifen, wodurch eine formschlüssige Verbindung der Lager- und Arretiereinrichtung 25 mit dem Rechteckstab 19 entsteht.

Demnach liegen durch die Wirkung der von der Rollobahn 16 auf den Rechteckstab 19 übertragenen Zugspannung die rechtwinklig zu der Rollobahn 16 liegenden Zahnflanken 60, 62 aneinander an. Dabei bilden die Zahnflanken 60 ein festes Widerlager für den Rechteckstab 19.

Um ein sicheres Ausrücken und Wiedereingreifen der Verzahnungen 57, 58 durch die Schwenkbewegung des Rechteckstabes sicherzustellen, kann bei relativ groben Verzahnungen 57, 58 ein etwas größerer Schwenkbereich des Rechteckstabes 19 erforderlich sein. Dieser wird ermöglicht, indem die die Schwenkachse 29 definierenden Bohrungen 32, 33 sowie die diesen zugeordnete Öffnung 34 relativ nahe bei der Schraubenfeder 41 angeordnet werden. Die in Eingriffsrichtung der Verzahnung wirkende umgelenkte Federkraft der Schraubenfeder 41 ist dadurch merklich geringer als bei der vorstehend beschriebenen Ausführungsform. Dadurch ergibt sich eine geringer zur Verschwenkung der Rechteckstange 19 erforderliche Betätigungskraft.

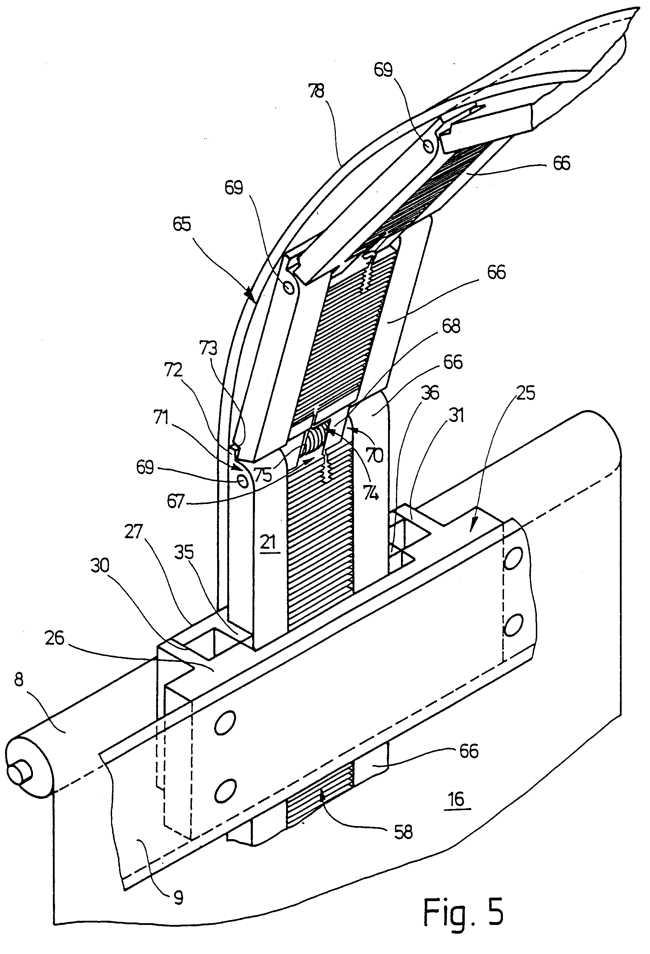

In einer weiteren, in Fig. 5 dargestellten Ausführungsform ist die das Halteelement 18 bildende Rechteckstange 19 durch eine Schubgliederkette 65 ersetzt. Für funktional gleiche Teile und Abschnitte sind wiederum die bereits eingeführten Bezugszeichen verwendet worden. Im Gegensatz zu den vorstehend beschriebenen Ausführungsformen ist jedoch die Lager- und Arretiereinrichtung 25 oberhalb der Wickelwelle 8 an dem Steg 9 auf der gleichen Stegseite wie die Wickelwelle 8 angeordnet, was einen vergrößerten Abstand zwischen der Wickelwelle 8 und dem Steg 9 erfordert.

Die Schubgliederkette 65 weist paarweise scharnierartig miteinander verbundene Segmente 66 auf, die untereinander gleich ausgebildet sind. Jedes Segment 66 hat eine im wesentlichen quaderförmige Gestalt, die einem Abschnitt des vorstehend beschriebenen Rechteckstabes 19 entspricht. An einem, in Fig. 5 oberen Ende ist jedes Segment 66 mit einer Ausnehmung 67 versehen, in die ein an dem jeweils benachbarten Segment vorgesehener Vorsprung 68 von passender Größe eingreift. Die die Ausnehmung 67 zwischen sich begrenzenden Abschnitte des Segmentes 66 weisen jeweils eine Bohrung 69 auf, die mit einer Bohrung 70 fluchtet, die in dem in der Ausnehmung 67 ligenden Vorsprung 68 vorgesehen ist. In den Bohrungen 69, 70 sitzt ein versenkter Scharnierbolzen, so daß ein Scharnier 71 zwischen den Segmenten 66 gebildet ist.

Dem Scharnier 71 benachbart liegt an jedem Segment 66 eine Anschlagleiste 72, die sich ausgehend von der einen Führungsfläche 23 über die Ausnehmung 67 bis zu der anderen Führungsfläche 24 erstreckt. Die Anschlagleiste 72 ist auf der der Rollobahn 16 zugewandten Seite des Segmentes 66 angeordnet. Passend zu der Anschlagleiste 72 ist an dem Segment 66 eine Ecknut 73 vorgesehen, die sich über die Breite des Segmentes 66 erstreckt. Wenn die mit dem Scharnier 71 verbundenen Segmente 66 gerade ausgerichtet sind, liegt die Anschlagleiste 72 in der Ecknut 73 an. Die Schwenkfreiheit des Scharniers 71 ist dadurch einseitig begrenzt.

Zur federnden Vorspannung der über das Scharnier 71 verbundenen Segmente 66 ist in dem Vorsprung 68 eine Tasche 74 vorgesehen, durch die der Scharnierbolzen durchführt. Auf dem Scharnierbolzen ist eine Schlingfeder 75 angeordnet, die sich unter Vorspannung stehend mit einem Ende 76 an dem einen Segment 66 und mit ihrem anderen Ende 77 an dem anderen Segment 66 abstützt.

An dem ausgezogenen Teil der Schubgliederkette 65 wirken alle auftretenden Biegebeanspruchungen in der gleichen Richtung gegen die Scharnieranschläge, so daß ein Wegklappen der Schubgliederkette 65 nicht zu befürchten ist: Die Schlingfedern 75 spannen die Segmente 66 gegen die Anschlagleisten 74 vor, die Rollobahn erzeugt lediglich eine Druckbeanspruchung sowie ein geringes, ebenfalls gegen die Anschlagleisten gerichtetes Biegemoment, und die Betätigungskraft zur Lösung der Lager- und Arretiereinrichtung 25 wird gleichfalls gegen die durch die Anschlagleisten gegebene steife Richtung der Schubgliederkette 65 ausgeübt.

Oberhalb der Lager- und Arretiereinrichtung 25 ist ein Führungsteil 78 vorgesehen, das die Schubgliederkette 65 entgegen der Federvorspannung in eine gekrümmte Form bringt. Diese Ausführungsform des Sonnenschutzrollos 6 eignet sich deshalb besonders für den Einbau in Fahrzeugen, bei denen zwischen dem Sonnenschutzrollo 6 und dem Fahrzeugdach nur wenig Platz zur Verfügung steht.

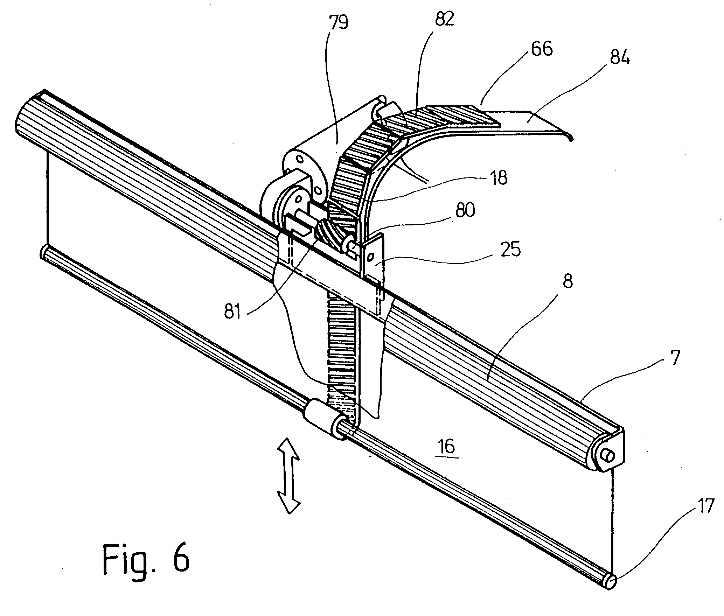

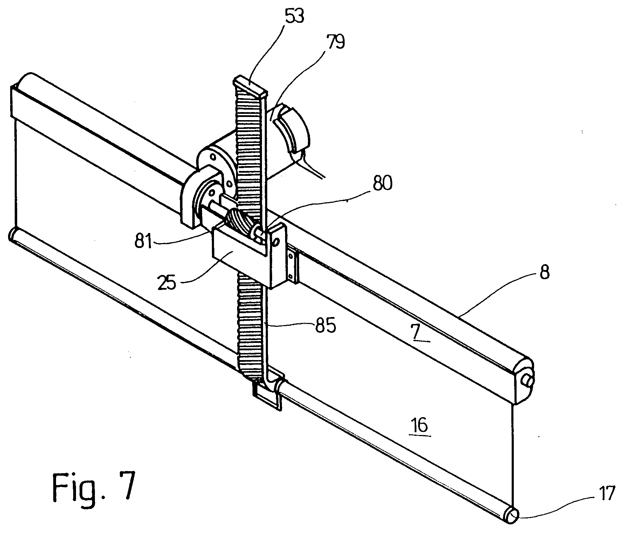

In den Fig. 6 und 7 sind motorbetätigte Ausführungsformen des Sonnenschutzrollos 6 dargestellt. Die an dem Sockel 7 vorgesehene Lager- und Arretiereinrichtung 25 ist starr augebildet, d.h. die Halbschalen 26, 27 sind fest miteinander verbunden. Zum wahlweisen axialen Verschieben des Halteelementes und zum Blockieren in einer definierten Lage ist die Lager- und Arretiereinrichtung 25 mit einem Elektromotor 79 versehen, der eine parallel zu der Wickelwelle 8 angeordnete Antriebswelle 80 antreibt. Die Antriebswelle 80 trägt ein Ritzel 81, dessen Verzahnung in eine entsprechende Verzahnung 82 des Halteelementes 18 eingreift.

Bei der in der Fig. 6 dargestellten Ausführungsform des Sonnenschutzrollos 6 als Halteelement 18 ist eine Schubgliederkette 83 vorgesehen, die im wesentlichen wie die Schubgliederkette 65 in Fig. 5 aufgebaut ist. Zusätzlich sind die Segmente auf der der Rollobahn 16 zugewandten Seite mit einer Schrägverzahnung 83 versehen, in die das Ritzel 81 eingreift.

Wenn die Zugschiene 17 und die Schubgliederkette 83 relativ schwer ausgebildet werden, kann auf die Schlingfedern 75 und damit auf die Vorspannung auf die gestreckte Stellung zu verzichtet werden. Die Rollobahn wird dann durch das Gewicht der Zugschiene 17 und der Schubgliederkette 83 ausgezogen, das auch die Schubgliederkette 83 gestreckt hält.

Oberhalb der Wickelwelle 8 ist ein Führungsteil 84 angeordnet, auf dem die oberhalb der Lager- und Arretiereinrichtung 25 befindlichen Segmente 66 aufliegen.

Bei der in der Fig. 7 dargestellten Ausführungsform des Sonennschutzrollos 8 ist als Halteelement 18 eine Zahnstange 85 vorgesehen, die mit dem Ritzel 81 im Eingriff steht.

## Patentansprüche

1. Sonnenschutzrollo (6), insbesondere für Kraftfahrzeuge,
mit einer in einem Sockel (7) drehbar gelagerten, von einer vorgespannten Federeinrichtung in Aufrollrichtung vorgespannten Wickelwelle (8),an der eine Rollobahn (16) mit einer Kante befestigt ist, der eine weitere, mit einer Zugschiene (17) versehene Kante gegenüberliegt,
mit wenigstens einem biege- und drucksteifen Halteelement (18), das mit einem Ende fest mit der Zugschiene (17) verbunden ist und das wenigstens im Bereiche der Rollobahn (16) zu der ausgefahrenen Rollobahn (16) im wesentlichen parallel sowie im rechten Winkel zu der Wickelwelle (8) angeordnet ist, und
mit einer Lager- und Arretiereinrichtung (25) zum Arretieren des Halteelementes (18), die an dem Sockel (7) befestigt ist und durch die das Halteelement (19) längsverschieblich hindurchführt.

2. Sonnenschutzrollo nach Anspruch 1, dadurch gekennzeichnet, daß das Halteelement (18) über die Lager- und Arretiereinrichtung (25) unverdrehbar an dem Sockel (7) gelagert ist.

3. Sonnenschutzrollo nach Anspruch 1, dadurch gekennzeichnet, daß das Halteelement (18) einen polygonalen, mit einer zur Lagerung des Halteelementes (18) in der Lager- und Arretiereinrichtung (25) vorgesehenen Öffnung (28) übereinstimmenden Querschnitt aufweist.

4. Sonnenschutzrollo nach Anspruch 1, dadurch gekennzeichnet, daß die Lager- und Arretiereinrichtung (25) eine Schwenkbewegung des Halteelementes (18) um eine zu der Wickelwelle (8) parallele, innerhalb der Lager- und Arretiereinrichtung (25) liegende Schwenkachse (29) ermöglichend ausgebildet ist.

5. Sonnenschutzrollo nach Anspruch 4, dadurch gekennzeichnet, daß das Halteelement (18) in seiner Schwenkbewegung durch ein Federelement (41) auf einen Anschlagteil (47) zu vorgespannt ist.

6. Sonnenschutzrollo nach Anspruch 4, dadurch gekennzeichnet, daß das Halteelement (18) durch die Schwenkbewegung um die Schwenkachse (29) entgegen der Vorspannung des Federelementes (41) von einer Blockierstellung in eine Freigabestellung überführbar ist, wobei das Halteelement (18) in der Blockierstellung unverschieblich in der Lager- und Arretiereinrichtung (25) gehalten und in der Freigabestellung in der Lager- und Arretiereinrichtung (25) axial verschieblich ist.

7. Sonnenschutzrollo nach Anspruch 1, dadurch gekennzeichnet, daß die Lager- und Arretiereinrichtung (25) zwei Halbschalen (26, 27) aufweist, die um die zu der Wickelwelle (8) parallele Schwenkachse (29) schwenkbar aneinander gelagert sind, wobei eine der Halbschalen (26) fest mit dem Sockel (7) verbunden ist.

8. Sonnenschutzrollo nach Anspruch 7, dadurch gekennzeichnet, daß die an der fest mit mit dem Sockel (7) verbundenen Halbschale (26) schwenkbar gelagerte Halbschale (27) eine plane Lagerfläche (37) aufweist.

9. Sonnenschutzrollo nach Anspruch 7, dadurch gekennzeichnet, daß die fest mit dem Sockel (7) verbundene Halbschale (26) eine Haltefläche (48) aufweist, die einer an dem Halteelement (18) vorgesehenen Bremsfläche (51) zugeordnet ist.

10. Sonnenschutzrollo nach Anspruch 9, dadurch gekennzeichnet, daß die Haltefläche (48) bezüglich der Längsrichtung des Halteelementes (18) gegen die Schwenkachse (29) versetzt ist und daß die Bremsfläche (51) durch die Schwenkbewegung des Halteelementes (18) mit der Haltefläche (48) in und außer Eingriff bringbar ist.

11. Sonnenschutzrollo nach Anspruch 9, dadurch gekennzeichnet, daß sich die an dem Halteelement (18) vorgesehene Bremsfläche (51) über die Länge des Halteelementes (18) in Längsrichtung erstreckt.

12. Sonnenschutzrollo nach Anspruch 11, dadurch gekennzeichnet, daß an dem Halteelement (18) zu beiden Seiten der Bremsfläche (51) sich in Längsrichtung erstreckende Anlageflächen (22) vorgesehen sind.

13. Sonnenschutzrollo nach Anspruch 9, dadurch gekennzeichnet, daß die Haltefläche (48) mit der Bremsfläche (51) als Paarung mit hoher Haftreibung ausgebildet ist.

14. Sonnenschutzrollo nach Anspruch 9, dadurch gekennzeichnet, daß die Haltefläche (48) und die Bremsfläche (51) jeweils mit einer Verzahnung (51, 58) versehen sind, deren Abmessungen derart getroffen sind, daß deren Zähne (59) durch die Schwenkbewegung des Halteelementes (18) in und außer Eingriff bringbar sind.

15. Sonnenschutzrollo nach Anspruch 14, dadurch gekennzeichnet, daß die Verzahnung (57) im rechten Winkel zu der Längsrichtung des Halteelementes (18) liegende Zahnflanken (60) aufweist, und daß die Zahnflanken (62, 60) der Bremsfläche (51) und der Haltefläche (48), die durch die Wirkung der von der Federeinrichtung über die Rollobahn (16) ausgeübte Zugkraft aneinander anliegen, jeweils in rechtwinklig zu der Rollobahn (16) liegenden Ebenen liegen.

16. Sonnenschutzrollo nach einem der vorhergehenden Ansprüche, dadurch gekennzeichnet, daß das biegesteife Halteelement (18) ein Rechteckstab (19) ist.

17. Sonnenschutzrollo nach Anspruch 16, dadurch gekennzeichnet, daß der Rechteckstab (19) an seinem mit der Zugschiene (17) verbundenen Ende auf die Zugschiene (17) zu gekröpft ist und daß der Rechteckstab an seinem anderen Ende ein Anschlagmittel (53) zur Bgrenzung der maxiamlen Auszugsweite aufweist.

18. Sonnenschutzrollo nach einem der Ansprüche 1 bis 16, dadurch gekennzeichnet, daß das biegesteife Halteelement (18) in der Art einer Schubgliederkette (65, 83) ausgebildet ist.

19. Sonnenschutzrollo nach Anspruch 17, dadurch gekennzeichnet, daß das biegesteife Halteelement (18) eine Kette von Segmenten (66) aufweist, die um zu der Wickelwelle (8) parallele Scharnierachsen jeweils paarweise schwenkbar aneinander gelagert sind.

20. Sonnenschutzrollo nach Anspruch 1, dadurch gekennzeichnet, daß jedes Segment jeweils ein Anschlagmittel (72) aufweist, gegen das eines der benachbarten Segmente (66) federnd vorgespannt ist.

21. Sonnenschutzrollo nach Anspruch 19, dadurch gekennzeichnet, daß das Halteelement (18) stabförmig gestreckt ist, wenn die Segmente (66) an denen ihnen zugeordneten Anschlagmitteln (72) anliegen.

22. Sonnenschutzrollo nach Anspruch 19 bis 21, dadurch gekennzeichnet, daß an dem Sockel (7) an der der Rollobahn (16) abgewandten Seite ein Führungsteil (78, 84) für die Segmente (66) des Halteelementes (18) vorgesehen ist.

23. Sonnenschutzrollo nach Anspruch 1, dadurch gekennzeichnet, daß das als Rechteckstab (19) oder als Schubgliederkette (83) ausgebildete Halteelement (18) in der Lager- und Arretiereinrichtung (25) axial verschieblich gehalten und mit einer Antriebswelle (80) getrieblich verbunden ist.

24. Sonnenschutzrollo nach Anspruch 23, dadurch gekennzeichnet, daß das Halteelement (18) eine Verzahnung (83) aufweist, die mit einem auf der Antriebswelle (80) sitzenden Ritzel (81) in Eingriff steht.

25. Sonnenschutzrollo nach Anspruch 24, dadurch gekennzeichnet, daß die Antriebswelle (80) von einem Elektromotor (79) angetrieben ist.
